# EUROPEAN PATENT APPLICATION

(11) **EP 4 521 304 A1**
(43) Date of publication of application: **12.03.2025**
(21) Application number: 24194288.7
(22) Date of filing: 13.08.2024
(51) Int. Cl.: G06N 3/10, G06F 40/00

(54) **PLATFORM FOR ENTERPRISE ADOPTION AND IMPLEMENTATION OF GENERATIVE ARTIFICIAL INTELLIGENCE SYSTEMS**

(30) Priority: 07.09.2023 US 202318462519
(71) Applicant: Accenture Global Solutions Limited, Dublin 4 (IE)
(72) Inventor: PAUL, Nayanjyoti, Dublin (IE); RAY, Atish Shanker, Dublin (IE); SUBRAMANIAM, Kamakshi, Dublin (IE); TYAGI, Vineet, Dublin (IE); DILIP LOMATE, Sheetal, Dublin (IE)
(74) Representative: Strange, Harry George

(57) **Abstract**

Implementations for receiving, by a GAI integration platform, a request from an application executed by an enterprise system of an enterprise, the application being executed remotely from the GAI integration platform, processing, through a control tier of the GAI integration platform, at least a portion of the request through a set of modules to generate a prompt that is responsive to the request, the set of modules including one or more of a prompt template module, a prompt quality module, and a personally identifiable information (PII) detection module, transmitting, by the GAI integration platform, the prompt to a GAI system of a plurality of GAI systems, receiving, by the GAI integration platform, a response from the GAI system, the response comprising content generated by the GAI system in response to the prompt, and transmitting, by the GAI integration platform, the response to the application.

## Description

### BACKGROUND

Enterprises continuously seek to improve and gain efficiencies in their operations. To this end, enterprises employ software systems to support execution of operations. Enterprises integrate systems in the domain of so-called intelligent enterprise, which can employ artificial intelligence (AI) that can include, for example, machine learning (ML) models. For example, AI can be used for data analytics and/or automating tasks in support of enterprise operations.

In the field of AI, so-called generative AI (GAI) has recently seen an explosion in popularity. GAI can be described as including ML models that generate content based on training data. For example, large language models (LLMs) are a form of GAI that can be used to generate text for a variety of use cases. In some examples, LLMs can be integrated in digital assistants (e.g., chatbots), replacing traditional rule-based systems, to provide textual responses to user input. GAI can be used to generate a variety of content including, but not limited to text, images, audio, and video.

The increasing power and popularity of GAI has seen enterprises seeking avenues to leverage GAI in improving enterprise operations. However, integrating GAI into enterprise platforms is a non-trivial task. For example, GAI can present various technical challenges and can have disadvantages that have to be managed.

### SUMMARY

Implementations of the present disclosure are generally directed to integration of generative artificial intelligence (GAI) into enterprise operations. More particularly, implementations of the present disclosure are directed to a GAI integration platform that functions as an intermediary between enterprise systems and GAI systems to enable enterprises to efficiently and securely leverage GAI in their enterprise operations.

In some implementations, actions include receiving, by a GAI integration platform, a request from an application executed by an enterprise system of an enterprise, the application being executed remotely from the GAI integration platform, processing, through a control tier of the GAI integration platform, at least a portion of the request through a set of modules to generate a prompt that is responsive to the request, the set of modules including one or more of a prompt template module, a prompt quality module, and a personally identifiable information (PII) detection module, transmitting, by the GAI integration platform, the prompt to a GAI system of a plurality of GAI systems, receiving, by the GAI integration platform, a response from the GAI system, the response comprising content generated by the GAI system in response to the prompt, and transmitting, by the GAI integration platform, the response to the application. Other implementations of this aspect include corresponding systems, apparatus, and computer programs, configured to perform the actions of the methods, encoded on computer storage devices.

These and other implementations can each optionally include one or more of the following features: processing, through a control tier of the GAI integration platform, at least a portion of the request through a set of modules to generate a prompt that is responsive to the request includes populating a prompt template at least partially based on data provided in a payload of the request; processing, through a control tier of the GAI integration platform, at least a portion of the request through a set of modules to generate a prompt that is responsive to the request includes determining context data representative of one or more of the enterprise and an enterprise operation, and providing the prompt as a few-shot prompt that includes at least a portion of the context data; processing, through a control tier of the GAI integration platform, at least a portion of the request through a set of modules to generate a prompt that is responsive to the request includes determining context data from at least one external source based on data provided in a payload of the request, and providing the prompt as a few-shot prompt that includes at least a portion of the context data; one or more of the request and the prompt is processed by the GAI integration platform to mitigate presence of one or more of PII and profanity before transmitting the prompt to the GAI system; actions further include logging interaction data representative of requests from and responses to the application, and providing one or more dashboards that graphically depict at least a portion of the interaction data; and a GAI model of the GAI system is fine-tuned based on enterprise data provided by the enterprise.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, for example, apparatus and methods in accordance with the present disclosure are not limited to the combinations of aspects and features specifically described herein, but also may include any combination of the aspects and features provided.

The details of one or more implementations of the present disclosure are set forth in the accompanying drawings and the description below. Other features and advantages of the present disclosure will be apparent from the description, drawings, and claims.

### BRIEF DESCRIPTION OF DRAWINGS

FIG. 1 depicts a conceptual architecture for a generative artificial intelligence (GAI) integration platform in accordance with implementations of the present disclosure.
FIG. 2 depicts a conceptual architecture including the GAI integration platform of the present disclosure.
FIG. 3 depicts an example architecture including a GAI integration platform in accordance with implementations of the present disclosure.
FIGs. 4A-4C depict user interfaces (UIs) displaying respective dashboards in accordance with implementations of the present disclosure.
FIG. 5 depicts an example process that can be executed in accordance with implementations of the present disclosure.

Like reference numbers and designations in the various drawings indicate like elements.

### DETAILED DESCRIPTION

Implementations of the present disclosure are generally directed to integration of generative artificial intelligence (GAI) into enterprise operations. More particularly, implementations of the present disclosure are directed to a GAI integration platform that functions as an intermediary between enterprise systems and GAI systems to enable enterprises to efficiently and securely leverage GAI in their enterprise operations.

In some implementations, actions include receiving, by a GAI integration platform, a request from an application executed by an enterprise system of an enterprise, the application being executed remotely from the GAI integration platform, processing, through a control tier of the GAI integration platform, at least a portion of the request through a set of modules to generate a prompt that is responsive to the request, the set of modules including one or more of a prompt template module, a prompt quality module, and a personally identifiable information (PII) detection module, transmitting, by the GAI integration platform, the prompt to a GAI system of a plurality of GAI systems, receiving, by the GAI integration platform, a response from the GAI system, the response comprising content generated by the GAI system in response to the prompt, and transmitting, by the GAI integration platform, the response to the application.

Implementations of the present disclosure are described in further detail herein with non-limiting reference to example GAI systems. Example GAI systems referenced herein include, but are not limited to, OpenAI 3.5 Turbo, OpenAI GPT 4 Chat, OpenAI GPT 4 Chat (32), DallE, Cohere Completions, and ScaleAI FLAN-T5. It is contemplated, however, that implementations of the present disclosure can be realized with any appropriate GAI system.

Further, implementations of the present disclosure are described in further detail herein with non-limiting reference to an example GAI model, namely a LLM, which can be used to generate textual content in response to prompts. It is contemplated, however, that implementations of the present disclosure can be realized with any appropriate GAI model, such as GAI models that generate text, images, audio, and video.

In general, a LLM can be described as an advanced type of language model that is trained using deep learning techniques on massive amounts of text data. LLMs can generate human-like text and can perform various natural language processing (NLP) tasks (e.g., translation, question answering). In contrast, the definition of a language model refers to the concept of assigning probabilities to sequences of words, based on the analysis of text corpora. A language model can be of varying complexity, from simple n-gram models to more sophisticated neural network models. However, the term LLM refers to models that use deep learning techniques and have many parameters, which can range from millions to billions. LLMs can capture complex patterns in language and produce text that is often indistinguishable from that written by humans. This data is processed through a deep learning architecture, such as a recurrent neural network (RNN) or a transformer model.

To provide further context, and as introduced above, enterprises continuously seek to improve and gain efficiencies in their operations. To this end, enterprises employ software systems to support execution of operations. Enterprises integrate systems in the domain of so-called intelligent enterprise, which can employ artificial intelligence (AI) that can include, for example, machine learning (ML) models. For example, AI can be used for data analytics and/or automating tasks in support of enterprise operations.

In the field of AI, GAI has seen an explosion in popularity. GAI can be described as including ML models that generate content based on training data. For example, large language models (LLMs) are a form of GAI that can be used to generate text for a variety of use cases. In some examples, LLMs can be integrated into digital assistants (e.g., chatbots), replacing traditional rule-based systems, to provide textual responses to user input. GAI can be used to generate a variety of content including, but not limited to text, images, audio, and video.

The increasing power and popularity of GAI has seen enterprises seeking avenues to leverage GAI in improving enterprise operations. However, integrating GAI into enterprise platforms is a non-trivial task. For example, GAI can present various technical challenges and can have disadvantages that have to be managed. One technical challenge is that GAI is frequently provided as third-party platforms that an enterprise must connect to and interact with. As such, disadvantages can include leakage of enterprise proprietary information and/or personally-identifiable information (PII), as well as inaccuracies in the content that is returned from the third-party GAI systems. Another technical challenge is so-called prompt engineering, which can generally be described as providing prompts that enable interactions with GAI models, and triggering responses from GAI models that are accurate and usable. Another technical challenge is that GAI models are trained on general training data, as opposed to training data that is specific to any specific domain, individual enterprise, and/or any individual enterprise operation. Consequently, without managing this, responses from GAI models can lack relevancy to an enterprise and/or an enterprise operation.

In view of the foregoing, and as introduced above, implementations of the present disclosure are directed to a GAI integration platform that functions as an intermediary between enterprise systems and GAI systems to enable enterprises to efficiently and securely leverage GAI systems in their operations. As described in further detail herein, the GAI integration platform of the present disclosure provides measures (e.g., security, governance) and capabilities (e.g., prompt engineering) to enable enterprises to quickly and efficiently adopt GAI systems into their operations. In some implementations, the GAI integration platform can be described in terms of a set of planes that can include, but is not limited to a model plane, a security plane, a control plane, an application plane, and a governance plane.

In general, the GAI integration platform of the present disclosure is built on pillars of process and technology. From a process perspective, each enterprise is supported in identifying and setting up an operating model, identifying and documenting the value add of integrating GAI as part of enterprise processes, defining and documenting data operations, model operations, and GAI operations, as well as documenting reusable archetypes and patterns for application implementations. From the technology perspective, activities can include developing a security model (e.g., from the perspective of data, platform, application, and model), investing in governance and monitoring (including tools and capabilities), defining and documenting access controls (e.g., from the perspective of data, platform, application, and model), and keeping continuous track of third-party GAI providers (also referred to as vendors), their GAI model offerings, and assessment of the GAI model in terms of deployment patterns, cost, efficiency, speed, quality, ability to fine-tune, ability to customize, ease of ownership, and the like.

In further detail, the GAI integration platform of the present disclosure can be described as an end-to-end framework that provides a comprehensive structure to build, deploy, and own applications that leverage third-party GAI systems. This end-to-end framework is provided as a layered architecture that can include an application layer, a data access layer, a templates and libraries layer, an application programming interface (API) layer, and a GAI systems layer. A monitoring and governance layer spans the overall end-to-end framework.

The GAI systems layer includes the GAI models themselves (e.g., LLMs) and addresses the selection, deployment, maintenance, and management of the GAI models. The API layer includes API access and controls to enable interactions with the GAI systems deployed in a secure, managed, and governed manner, as described in further detail herein. The templates and libraries layer provides a collection of libraries and templates that support pre-built solutions that can be adopted by the enterprises and that can be customized for individual enterprises. The data access layer provides storage of and secure access to data across multiple, disparate datastores that can include, for example and without limitation, vector databases (DBs), as well as the ability to search and comprehend knowledge. The application layer can be described as stitching the other layers together within the context and processes of the enterprise. In some examples, the monitoring and governance layer includes integration with other ML and cognitive solutions (non-GAI) along with integration with governance tools and processes. This enables each application to be auditable and accountable.

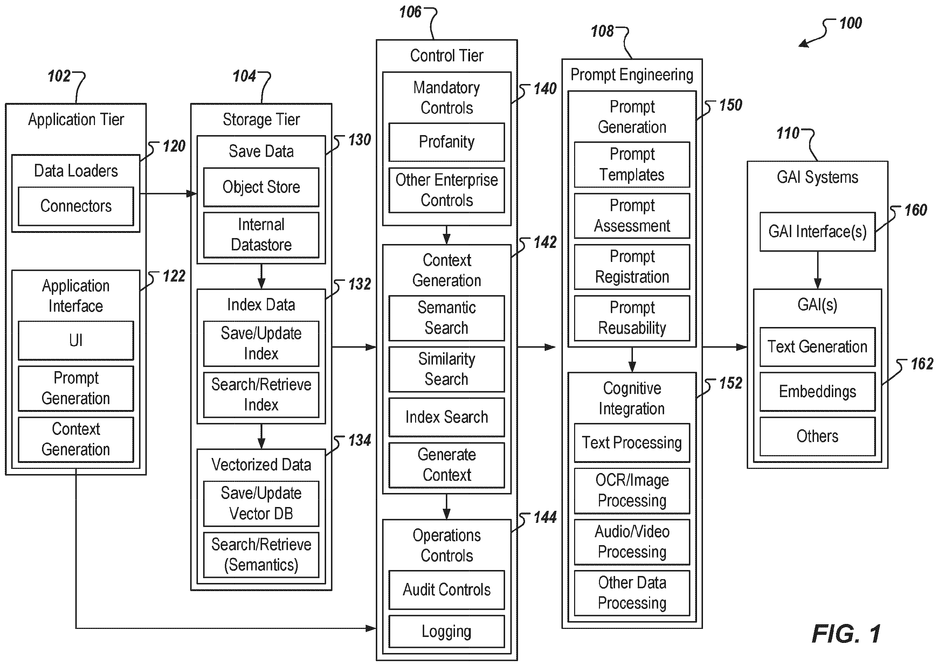

FIG. 1 depicts a conceptual architecture 100 for the GAI integration platform of the present disclosure. In the example of FIG. 1, the conceptual architecture 100 includes an application tier 102, a storage tier 104, a control tier 106, a prompt engineering tier 108, and a GAI systems tier provided as a GAI systems tier 110. In some implementations, and as described in further detail herein, the application tier 102 enables an application of an enterprise to interact with one or more GAI models (e.g., LLMs) in the GAI systems tier 110 through the control tier 106 and the prompt engineering tier 108. In some examples, the storage tier 104 stores various types of data that the application can access from the application tier 102.

In further detail, the application tier 102 includes a data loaders module 120 and an application interface module 122. In some examples, the data loaders module 120 includes connectors that enable data storage and retrieval with the storage tier 104. Example connectors can include, but are not limited to, a relational database management system (RDBMS) connector, a not only SQL (or non-SQL) (NoSQL) connector, a secure file transfer protocol (SFTP) connector, a bulk data connector, and a stream data connector. In some examples, the application interface module 122 enables communication with the control tier 106, and includes a user interface (UI), prompt generation, and context generation. In some examples, and as described in further detail herein, the UI can enable a user (e.g., an agent of an enterprise) to interact with an application (e.g., chatbot) and/or access dashboards. In some examples, the prompt generation enables provisioning of prompts that can be used to query a LLM. In some examples, the context generation enables provisioning of context for prompts that are used to query the LLM (e.g., context of the enterprise, context of an enterprise operation).

In the example of FIG. 1, the storage tier 104 includes a save data module 130, an index data module 132, and a vectorized data module 134. In some examples, the save data module 130 includes an object store (e.g., to store data objects, binary large objects (BLOBs)) and an internal datastore. In general, the save data module 130 represents storage of data that can be accessed by an application in the application tier 102 for execution of enterprise operations. In some examples, the index data module 132 includes a save/update index and a search/retrieve index. The save/update index can be used to index data that is stored in the storage tier for search and/or retrieval using the search/retrieve index. In some examples, the vectorize data module 134 includes a save/update vector database (DB) sub-module and a search/retrieve sub-module. In some examples, vectors can be provided for data stored in the storage tier 104, each vector being a n-dimensional representation of respective data (also referred to as an embedding). The vectors can be used for search (e.g., semantic search) and retrieval of the data. For example, vectors can be compared (e.g., using dot product) to determine similarity therebetween.

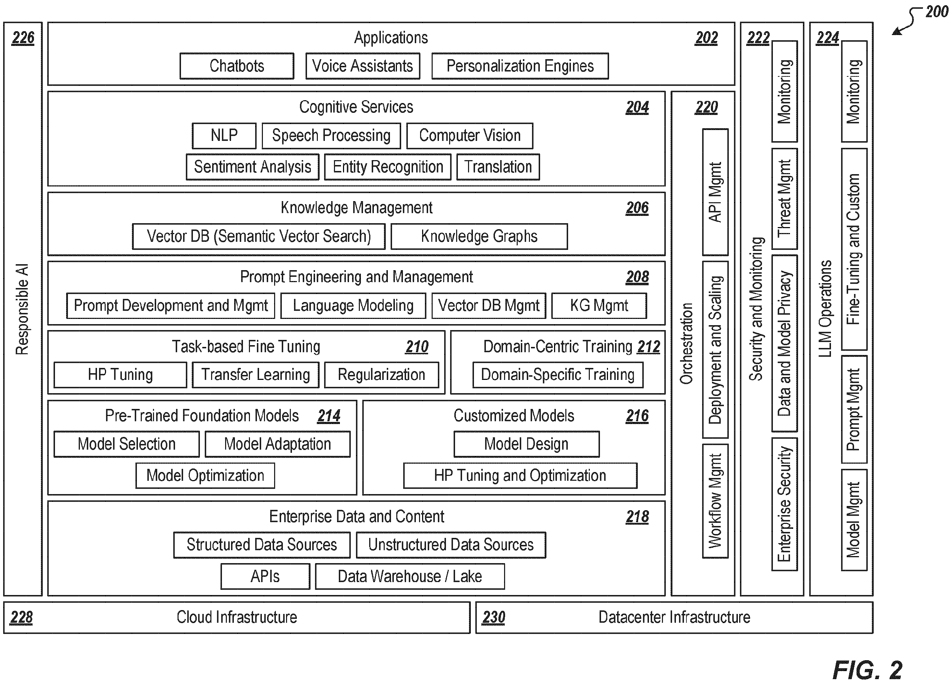

In the example of FIG. 2, the control tier 106 includes a mandatory controls module 140, a context generation module 142, and an operations control module 144. In some examples, the mandatory controls module 140 represents modules that are determined to provide mandatory functionality for interactions with third-party LLM systems. Example mandatory modules are described in further detail herein. In some examples, the context generation module 142 includes functionality for semantic search, similarity search, index search and context generation. For example, the context generation module can generate a context for an enterprise and/or an enterprise operation (e.g., based on data stored in the storage tier 104), and the context can be used to provide enterprise-specific and/or operation-specific responses from the LLM(s). In some examples, the operations controls module 144 provides operations functionality, such as audit controls and logging.

In the example of FIG. 2, the prompt engineering tier 108 includes a prompt generation module 150 and a cognitive interaction module 152. In some examples, the prompt engineering tier 150 includes prompt templates, prompt assessment, prompt registration, and prompt reusability. In general, the prompt generation module 150 enables a prompt to be generated using a prompt template that is specific to a GAI model (e.g., LLM) that is to be queried. The prompt can be assessed (e.g., for quality, accuracy) before being used to query the GAI model, and can be registered and stored for reuse (e.g., avoid consumption of resources in recreating the prompt for subsequent queries). In some examples, the cognitive integration module 152 provides for content processing, such as text processing (e.g., sentiment analysis, NLP, translation), optical character recognition (OCR) and image processing, audio/video processing (e.g., speech-to-text, speech simulation, audio simulation), and other data processing discussed herein.

In general, the GAI systems tier 110 represents GAI systems (e.g., third-party GAI systems) that can be accessed using the GAI integration platform of the present disclosure. In the example of FIG. 2, the GAI systems tier 110 includes GAI interfaces 160 for interacting with respective GAI systems 162. For example, a GAI interface 160 can include an API that is used to interact with a GAI system 162. The GAI systems 162 can provide various GAI services including, but not limited to, text generation, embedding generation, image generation, audio generation, video generation, and the like.

FIG. 2 depicts a conceptual architecture 200 including the GAI integration platform of the present disclosure. In general, the conceptual architecture 200 of FIG. 2 is representative of the multi-layered, end-to-end framework summarized above. In the example of FIG. 2, the conceptual architecture 200 includes an applications component 202, a cognitive services component 204, a knowledge management component 206, a prompt engineering and management component 208, a task-based fine-tuning component 210, a domain-centric training component 212, a pre-trained foundation models component 214, a customized models component 216, an enterprise data and content component 218, an orchestration component 220, a security and monitoring component 222, a LLM operations component 223, a responsible AI component 226, a cloud infrastructure component 228, and a datacenter infrastructure component 230.

In some examples, the applications component 202 executes the logic and project-specific implementation for an application. In the example of FIG. 2, the applications component 202 includes non-limiting example applications of chatbots, voice assistants, and personalization engines. In some examples, a chatbot (also referred to as a conversational agent) can use NLP to simulate human-like conversations with users. In some examples, a voice assistant uses speech recognition and synthesis to enable users to interact with the application through spoken commands and responses. In some examples, a personalization engine uses ML to analyze user data and behavior to provide personalized content, recommendations, and experiences. In some examples, and as described herein, the application includes a UI (e.g., a chatbot displayed in a GUI) or other user-accessible interface to enable users to provide user input and received output (e.g., textual content generated by a LLM that is responsive to the user input). As one non-limiting example, the application can include a customer-facing chatbot that answers tax questions. As another non-limiting example, the application can include a marketing editor that enables a content creator to generate product descriptions.

In the example of FIG. 2, the cognitive services component 204 includes functionality (e.g., computer-executable modules) for NLP, speech processing, computer vision, sentiment analysis, entity recognition, and translation. In some examples, functionality of the cognitive services component 204 supports interactions between applications of the applications component 202 and GAI systems, such as LLMs accessible through the LLM operations component 224. For example, text input to an application can be processed using: NLP to assign one or more categories to the text; translation to translate the text between languages; sentiment analysis to determine one or more sentiments represented in the text; and entity recognition to identify named entities (e.g., person, place, things) within the text. As another example, voice input can be processed using speech processing to provide text from speech of a user (i.e., speech-to-text). As another example, images input by a user can be processed using computer vision to identify entities and/or other information represented in the image. In general, cognitive services can include, but are not limited to OCR and text extraction, speech-to-text, speech diarization, PII detection, toxicity detection, named entity recognition (NER), sentiment analysis, audio synthesis, video synthesis, and transcription.

In the example of FIG. 2, the knowledge management component 206 includes a vector database (DB) (e.g., to support semantic vector search) and one or more knowledge graphs. In some examples, a vector can be described as an n-dimensional, numerical representation of information (e.g., n = 1536). In some examples, a knowledge graph (KG) can be described as a representation of real-world entities and their relationships in a database, and can be used to, for example, capture the context of any conversation and identify similar relations.

In some examples, the knowledge management component 206 can be described as a context setting layer that hosts an organizational knowledge as a searchable interface. For example, prompts to a LLM are augmented with domain data and/or organizational data through the knowledge management layer 206. In some examples, context can be provided for prompts in the form of few-shot examples to provide a few-shot prompt. In some examples, providing the context with the prompt can be referred to as few-shot learning. In NLP, few-shot learning (also referred to as in-context learning and/or few-shot prompting) is a prompting technique that enables a LLM to process examples before attempting a task (e.g., generating text responsive to a prompt). The few-shot examples are input to the LLM with the prompt to prime the LLM to provide context for queries submitted to the LLM. For example, few-shot examples can inform the LLM as to what the response to the prompt should look like. In some examples, few-shot examples can be determined from the vector database, which stores information as multidimensional vectors (also referred to as embeddings). In some examples, few-shot examples can be provided based on data stored in a knowledge graph.

In the example of FIG. 2, the prompt engineering and management component 208 includes prompt development and management, language modeling, vector DB management, and knowledge graph management. Prompt engineering can be described as providing prompts that represent appropriate queries in an appropriate sequence to a LLM model. The prompt engineering and management component 208 connects with the vector DB and the knowledge graphs of the knowledge management layer 206 and other cognitive services to provide, for example, domain-based context and other details that can be provided to a LLM to enable the LLM correctly interpret and answer the prompt. For example, the prompt engineering and management component 208 can enable provisioning of a prompt based on a sentiment and/or an emotional state of a user that provides input to the application. In this example, the user input can be processed to determine sentiment and/or emotional state and a prompt can be provided based thereon. As another example, the prompt engineering and management component 208 can enable provisioning of a prompt based on enterprise data, such that the LLM response is specific to a context of the enterprise data.

In the example of FIG. 2, the task-based fine-tuning component 210 includes hyperparameter (HP) tuning, transfer learning, and regularization. In some examples, a LLM can be fine-tuned for one or more specific tasks. In some examples, fine-tuning can be described as a process, in which task-specific training data can be used to fine-tune a LLM (e.g., a pre-trained foundational LLM) and/or a custom LLM to ensure that the LLM(s) can generate specific formatted responses. Fine-tuning enables the LLMs to answer in a specific format and structure that can be suitable for organizational needs of an enterprise.

In the example of FIG. 2, the domain-centric training component 212 includes domain-specific training. For example, some LLMs enables customization to fine-tune the LLMs on a domain-specific. This enables the LLMs to provide domain-specific responses and/or formats.

In the example of FIG. 2, the pre-trained foundation models component 214 includes model selection, model adaptation, and model optimization. In some examples, the pre-trained foundation models component 214 enables access to a LLMs that are pre-trained and offered as managed services by multiple third-parties (vendors) (e.g., OpenAI, SambaNova, ScaleAI). Such LLMs can be described as off-the-shelf LLMs that are accessed as a service (e.g., through respective APIs).

In the example of FIG. 2, the customized models component 216 includes model design and hyperparameter (HP) tuning and optimization. In some examples, customized models are typically available as public models and can be downloaded and customized (e.g., in terms of training, re-training, fine-tuning, etc.). Typically, customized models can be deployed with a cloud account and owned and managed by a project team (e.g., of a respective enterprise).

In the example of FIG. 2, the enterprise data and content component 218 enables access to structured data sources, unstructured data sources, APIs, and data warehouses and/or data lakes. In some examples, building an application that leverages a LLM and that is powered by knowledge and context of an enterprise can require access to a knowledge base of the enterprise. The enterprise data and content component 218 enables such data access for the application. Typically, the enterprise data resides on a central data platform and/or a central data warehouse.

In the example of FIG. 2, the orchestration component 220 includes workflow management, deployment and scaling, and API management. In some examples, the orchestration component 220 connects services with knowledge and datasets to orchestrate end-to-end flow of application interactions with LLMs. As a non-limiting example, Apache Airflow can be used to provide the orchestration component 220.

In the example of FIG. 2, the security and monitoring component 222 includes enterprise security, data and model privacy, threat management, and monitoring. In some examples, the security and monitoring component 222 addresses threats and security concerns regarding the applications and their use of LLMs, and how the LLMs themselves are storing and using the data.

In the example of FIG. 2, the LLM operations component 224 includes model management, prompt management, fine-tuning and customization, and monitoring. In some examples, the LLM operations component 224 addresses considerations and capabilities needed to operationalize LLM projects including the applications, the data, and the LLMs.

In some examples, the responsible AI component 226 addresses potential shortcomings of LLMs. For example, and as introduced above, LLMs are generative models that generate text or other content that is subject to drawbacks (e.g., bias, factual inaccuracies). The responsible AI component 226 focuses on what and how to evaluate the content generated to ensure it is acceptable (e.g., factually, socially) for use in applications.

In some examples, the cloud infrastructure component 228 aligns with the enterprise data and content component 218. Typically, enterprises use cloud-based data storage to store their data. Example cloud infrastructures include, without limitation, Microsoft Azure, Amazon Web Services (AWS), and Google Cloud Platform (GCP). In general, cloud infrastructures provide tools, services, and security to host applications in a cloud environment. In some examples, the datacenter infrastructure component 230 includes on-premise datacenters for hosting applications and/or LLMs in enterprise-specific datacenters.

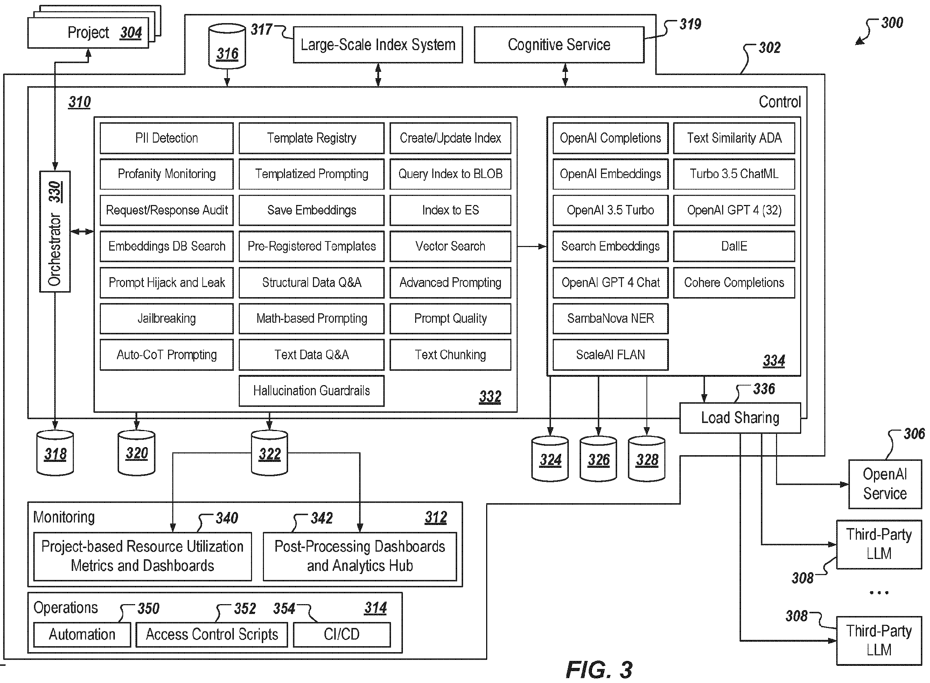

FIG. 3 depicts an example architecture 300 including a GAI integration platform 302 of the present disclosure. In accordance with implementations of the present disclosure, the GAI integration platform 302 enables interactions between one or more projects 304, and one or more GAI services, such as an OpenAI service 306, and LLM services 308. In some examples, each project 304 represents at least one application that is executed by an enterprise in support of enterprise applications. In some examples, each application includes a unique application identifier that uniquely identifies the application with the GAI integration platform 302. In this manner, the GAI integration platform 302 of the present disclosure can provide a multi-tenant environment to enable multiple enterprises to concurrently use the GAI integration platform 302. For example, the GAI integration platform 302 can separate data storage/retrieval, prompt generation, GAI system querying, and other functionality between enterprises at least partially based on application identifiers.

In the example of FIG. 3, the GAI integration platform 302 includes a control system 310, a monitoring system 312, an operations system 314, a large-scale index system 317, and a cognitive service 319. The GAI integration platform 302 also includes a data storage container 316, a log storage container 318, a template registry 320, an operations database 322, an embeddings database 324, a vector database 326, and a vector search database 328.

In the example of FIG. 3, the control system 310 includes an orchestrator 330, a mandatory modules and templates sub-system 332, a prompt generation sub-system 334, and a load sharing module 336. In the example of FIG. 3, the monitoring system 312 includes project-based resource utilization and metrics dashboards 340, and post-processing dashboards and analytics hub 342. In the example of FIG. 3, the operations system 314 includes an automation module 350, an access control scripts module 352, and a continuous integration and continuous delivery (CI/CD) module 354.

In accordance with implementations of the present disclosure, the control system 310 includes a set of mandatory modules. In some examples, a mandatory module is a module that provides functionality that is to be executed before a prompt can be submitted to a GAI system. Example mandatory modules can include, without limitation, a PII detector module, a profanity monitor module, a prompt hijacking prevention module, a prompt jailbreaking prevention module, a prompt leakage prevention module, and a prompt quality scoring module. In some examples, the PII detector module monitors for PII that is included in a prompt and can remediate occurrences of PII detected in a prompt. In some examples, the set of mandatory modules includes one or more of the mandatory modules discussed herein.

For example, the PII detector module can inhibit sending of the prompt to a GAI model. As another example, the PII detector module can mask or replace the PII within the prompt. In some examples, the profanity monitor module monitors for any profanity, bias, slurs, and the like in a prompt and can inhibit sending of the prompt to a GAI model in response. In some examples, the prompt hijacking prevention module evaluates prompts for hijacking (e.g., code injection to a prompt by a malicious user) and can inhibit sending of the prompt to a GAI model in response. In some examples, the prompt j ailbreaking prevention module monitors prompts for jailbreaking (e.g., a prompt that conceals malicious questions and/or surpasses protection boundaries) and can inhibit sending of the prompt to a GAI model in response. In some examples, the prompt leakage prevention module monitors prompts for potential leakage (e.g., prompt injection in which the GAI model is asked to return its own prompt to an injected response) and can inhibit sending of the prompt to a GAI model in response. In some examples, the prompt quality scoring module provides a readability score for each prompt and can selectively inhibit sending of the prompt to a GAI model in response (e.g., if the readability score is below a threshold score).

In some implementations, the control system 310 includes a set of operations management modules. Example operations management modules can include, without limitation, a request/response audit module, an embeddings module, an embeddings search module, a large-scale vector index module, and a load data to vector database module. In some examples, the request/response audit module stores requests to GAI models and responses from GAI models for auditing and/or validation. In some examples, the embeddings module saves embeddings into a common repository with, for example, tags and keywords. In some examples, the embeddings search module provides search capability on tags and keywords from the embedding repository. In some examples, the large-scale vector index module indexes large scale vectors into elastic search (ES). In some examples, the load data to vector database module indexes large-scale vectors into Weaviate, Cognitive Search, and ES. In some examples, the set of mandatory modules includes one or more of the operations management modules discussed herein.

In some implementations, the control system 310 includes a set of common templates modules. Example common templates modules can include, without limitation, a register template module, a templatized prompting module, an auto-prompt using fact-check chains module, an auto-prompt with third-party search module, an auto-prompt with wiki look-up module, a querying on structural data module, a math-based auto-prompt module, a querying on series of textual datasets module, an index documents for search module, a search on pre-registered files module, a search on external vector database module, an auto-prompt for task listing/prioritizing/execution module, an auto-prompt on advanced patterns module, and a prompt quality indicator module. In some examples, the set of common templates modules includes one or more of the common templates modules discussed herein.

In some examples, the register template module provides functionality to create and save prompt templates for reusability. In some examples, the templatized prompting module enables auto-generation of prompts based on questions and prompt templates from a template database. In some examples, the auto-prompt using fact-check chains module automatically generates and chains prompts together, including fact checking with knowledgebase and examples. In some examples, the auto-prompt with third-party search module provides functionality to generate prompts based on search results returned from a third-party search engine. In some examples, the auto-prompt with wiki look-up module provides functionality to generate prompts based on wiki search and look-up returned from a third-party wiki databases. In some examples, the querying on structural data module enables queries on structured data stored in a data store. In some examples, the math-based auto-prompt module provides functionality to incorporate math-based questions into prompts. In some examples, the querying on series of textual datasets module enables queries on unstructured data stored in a data store. In some examples, the index documents for search module provides functionality to scan and index series of documents from a BLOB store to a dedicated index. In some examples, the search on pre-registered files module provides functionality to respond to prompts based on pre-registered indexes. In some examples, the search on external vector database module interacts with vector databases to store and/or retrieve vectors. In some examples, the auto-prompt for task listing/prioritizing/execution module provides functionality to automatically create a sequence of tasks, prioritize the tasks, and execute the tasks. In some examples, the auto-prompt on advanced patterns module provides functionality to auto-generate prompts based on map reduce, refine, and re-rank outcomes. In some examples, the prompt quality indicator module analyzes prompt quality for readability (e.g., by a respective GAI model).

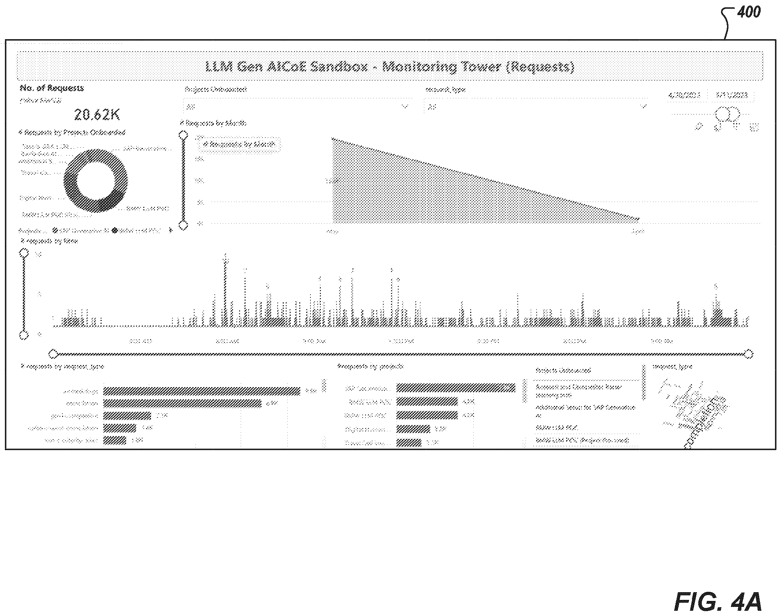

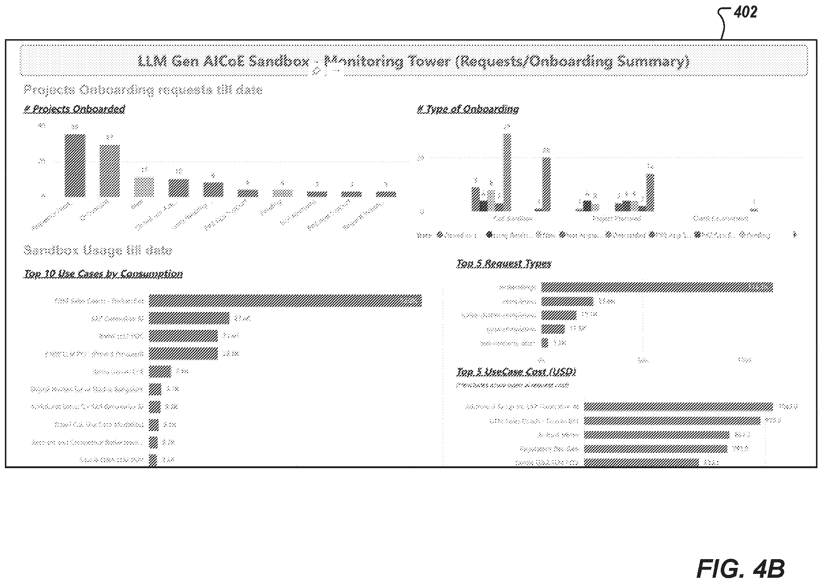

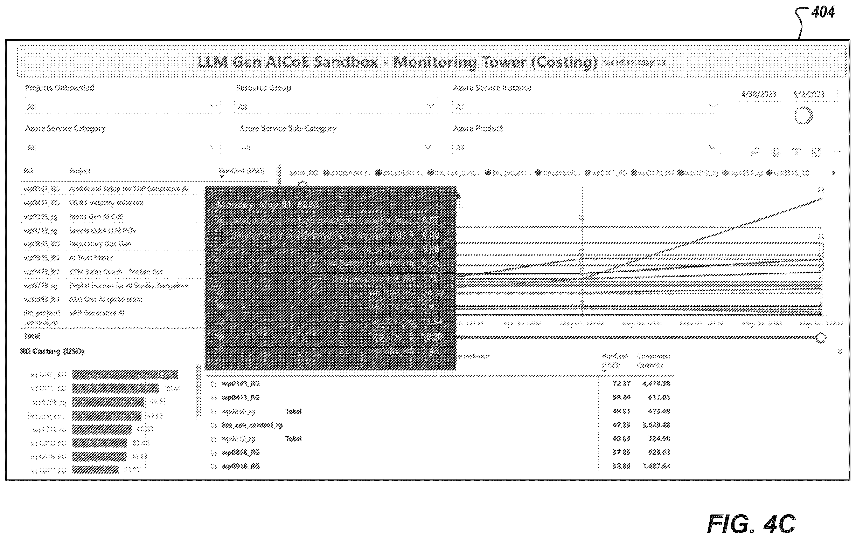

In some implementations, the monitoring system 312 retrieves and processes operations data stored in the operations database 322 and can provide a set of dashboards to depict resource utilization, analytics, and any appropriate metrics. In some examples, the dashboards are provided on a per-enterprise basis. That is, for example, a user of an enterprise can access the dashboards to view operations data to one or more applications of the enterprise through the GAI generation platform 302. FIGs. 4A-4C depict UIs displaying respective dashboards 400, 402, 404 in accordance with implementations of the present disclosure.

In accordance with implementations of the present disclosure, a project 304 can transmit a request to the GAI integration platform 302. For example, the request can be transmitted to the orchestrator 330 (e.g., using a hypertext transfer protocol (HTTP) end-point assigned to the orchestrator 330). In some examples, the orchestrator 330 can log the request (and details thereof) in the log storage container 318 (e.g., indexing the request by application identifier). In some implementations, the GAI integration platform 302 can process the request to generate a prompt for submission to a GAI system. In some examples, the request includes a payload (data) that can be processed to generate the prompt. In some examples, the request can be processed to determine a GAI system that the prompt is to be sent to. For example, the request can indicate a particular LLM system that is to be accessed.

In some implementations, the prompt is generated using one or more modules of the control system 310 and is transmitted to the OpenAI service 306 or a LLM service 308. For example, the load sharing module 336 can transmit the prompt based on a load sharing scheme (e.g., round-robin). The prompt is transmitted through an API of the respective LLM system, which processes the prompt to generate a response. The response is returned to the GAI integration platform 302, which returns the response to the project 304 that had submitted the request through the orchestrator 330. In some examples, the response (and details thereof) is logged in the log storage container 318.

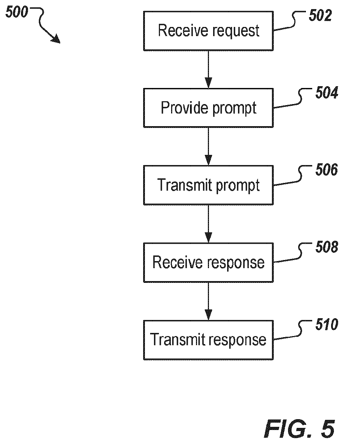

FIG. 5 depicts an example process 500 that can be executed in implementations of the present disclosure. In some examples, the example process 500 is provided using one or more computer-executable programs executed by one or more computing devices.

A request is received (502). For example, and as described in detail herein, the GAI integration platform 302 of FIG. 3 can receive a request from an application executed by an enterprise system of an enterprise as part of a project 304. The application is executed remotely from the GAI integration platform 302 (e.g., executed in a cloud computing environment on behalf of the enterprise, executed in an on-premise computing environment of the enterprise).

A prompt is provided (504). For example, and as described in detail herein, the GAI integration platform 302 generates a prompt that is responsive to the request. In some examples, the prompt is generated by populating a prompt template at least partially based on data provided in a payload of the request. In some examples, the prompt is generated by determining context data representative of one or more of the enterprise and an enterprise operation, and providing the prompt as a few-shot prompt that includes at least a portion of the context data. In some examples, the prompt is generated by determining context data from at least one external source based on data provided in a payload of the request, and providing the prompt as a few-shot prompt that includes at least a portion of the context data. In some examples, one or more of the request and the prompt is processed by the GAI integration platform 302 to mitigate presence of one or more of PII and profanity before transmitting the prompt to the GAI system.

The prompt is transmitted (506). For example, and as described in detail herein, the GAI integration platform 302 transmits the prompt to one of the OpenAI service 306 and a third-party LLM system 308. A response is received (508). For example, and as described in detail herein, the GAI integration platform 302 receives a response that is generated by the one of the OpenAI service 306 and a third-party LLM system 308 in response to the prompt. The response is transmitted (510). For example, and as described in detail herein, the GAI integration platform 302 transmits the response to the project 304 that has sent the request.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

Numbered statements of Invention:
1. A computer-implemented method for remote integration of generative artificial intelligence (GAI) systems to enterprise systems, the method comprising:
   receiving, by a GAI integration platform, a request from an application executed by an enterprise system of an enterprise, the application being executed remotely from the GAI integration platform;
   processing, through a control tier of the GAI integration platform, at least a portion of the request through a set of modules to generate a prompt that is responsive to the request, the set of modules comprising one or more of a prompt template module, a prompt quality module, and a personally identifiable information (PII) detection module;
   transmitting, by the GAI integration platform, the prompt to a GAI system of a plurality of GAI systems;
   receiving, by the GAI integration platform, a response from the GAI system, the response comprising content generated by the GAI system in response to the prompt; and
   transmitting, by the GAI integration platform, the response to the application.
2. The method of statement 1, wherein processing, through a control tier of the GAI integration platform, at least a portion of the request through a set of modules to generate a prompt that is responsive to the request comprises populating a prompt template at least partially based on data provided in a payload of the request.
3. The method of statement 1, wherein processing, through a control tier of the GAI integration platform, at least a portion of the request through a set of modules to generate a prompt that is responsive to the request comprises determining context data representative of one or more of the enterprise and an enterprise operation, and providing the prompt as a few-shot prompt that includes at least a portion of the context data.
4. The method of statement 1, wherein processing, through a control tier of the GAI integration platform, at least a portion of the request through a set of modules to generate a prompt that is responsive to the request comprises determining context data from at least one external source based on data provided in a payload of the request, and providing the prompt as a few-shot prompt that includes at least a portion of the context data.
5. The method of statement 1, wherein one or more of the request and the prompt is processed by the GAI integration platform to mitigate presence of one or more of PII and profanity before transmitting the prompt to the GAI system.
6. The method of statement 1, further comprising logging interaction data representative of requests from and responses to the application, and providing one or more dashboards that graphically depict at least a portion of the interaction data.
7. The method of statement 1, wherein a GAI model of the GAI system is fine-tuned based on enterprise data provided by the enterprise.
8. A system, comprising:
   one or more processors; and
   a computer-readable storage device coupled to the one or more processors and having instructions stored thereon which, when executed by the one or more processors, cause the one or more processors to perform operations for remote integration of generative artificial intelligence (GAI) systems to enterprise systems, the operations comprising:
      receiving, by a GAI integration platform, a request from an application executed by an enterprise system of an enterprise, the application being executed remotely from the GAI integration platform;
      processing, through a control tier of the GAI integration platform, at least a portion of the request through a set of modules to generate a prompt that is responsive to the request, the set of modules comprising one or more of a prompt template module, a prompt quality module, and a personally identifiable information (PII) detection module;
      transmitting, by the GAI integration platform, the prompt to a GAI system of a plurality of GAI systems;
      receiving, by the GAI integration platform, a response from the GAI system, the response comprising content generated by the GAI system in response to the prompt; and
      transmitting, by the GAI integration platform, the response to the application.
9. The system of statement 8, wherein processing, through a control tier of the GAI integration platform, at least a portion of the request through a set of modules to generate a prompt that is responsive to the request comprises populating a prompt template at least partially based on data provided in a payload of the request.
10. The system of statement 8, wherein processing, through a control tier of the GAI integration platform, at least a portion of the request through a set of modules to generate a prompt that is responsive to the request comprises determining context data representative of one or more of the enterprise and an enterprise operation, and providing the prompt as a few-shot prompt that includes at least a portion of the context data.
11. The system of statement 8, wherein processing, through a control tier of the GAI integration platform, at least a portion of the request through a set of modules to generate a prompt that is responsive to the request comprises determining context data from at least one external source based on data provided in a payload of the request, and providing the prompt as a few-shot prompt that includes at least a portion of the context data.
12. The system of statement 8, wherein one or more of the request and the prompt is processed by the GAI integration platform to mitigate presence of one or more of PII and profanity before transmitting the prompt to the GAI system.
13. The system of statement 8, wherein operations further comprise logging interaction data representative of requests from and responses to the application, and providing one or more dashboards that graphically depict at least a portion of the interaction data.
14. The system of statement 8, wherein a GAI model of the GAI system is fine-tuned based on enterprise data provided by the enterprise.
15. Computer-readable storage media coupled to the one or more processors and having instructions stored thereon which, when executed by the one or more processors, cause the one or more processors to perform operations for remote integration of generative artificial intelligence (GAI) systems to enterprise systems, the operations comprising:
   receiving, by a GAI integration platform, a request from an application executed by an enterprise system of an enterprise, the application being executed remotely from the GAI integration platform;
   processing, through a control tier of the GAI integration platform, at least a portion of the request through a set of modules to generate a prompt that is responsive to the request, the set of modules comprising one or more of a prompt template module, a prompt quality module, and a personally identifiable information (PII) detection module;
   transmitting, by the GAI integration platform, the prompt to a GAI system of a plurality of GAI systems;
   receiving, by the GAI integration platform, a response from the GAI system, the response comprising content generated by the GAI system in response to the prompt; and
   transmitting, by the GAI integration platform, the response to the application.
16. The computer-readable storage media of statement 15, wherein processing, through a control tier of the GAI integration platform, at least a portion of the request through a set of modules to generate a prompt that is responsive to the request comprises populating a prompt template at least partially based on data provided in a payload of the request.
17. The computer-readable storage media of statement 15, wherein processing, through a control tier of the GAI integration platform, at least a portion of the request through a set of modules to generate a prompt that is responsive to the request comprises determining context data representative of one or more of the enterprise and an enterprise operation, and providing the prompt as a few-shot prompt that includes at least a portion of the context data.
18. The computer-readable storage media of statement 15, wherein processing, through a control tier of the GAI integration platform, at least a portion of the request through a set of modules to generate a prompt that is responsive to the request comprises determining context data from at least one external source based on data provided in a payload of the request, and providing the prompt as a few-shot prompt that includes at least a portion of the context data.
19. The computer-readable storage media of statement 15, wherein one or more of the request and the prompt is processed by the GAI integration platform to mitigate presence of one or more of PII and profanity before transmitting the prompt to the GAI system.
20. The computer-readable storage media of statement 15, wherein operations further comprise logging interaction data representative of requests from and responses to the application, and providing one or more dashboards that graphically depict at least a portion of the interaction data.

## Claims

1. A computer-implemented method for remote integration of generative artificial intelligence (GAI) systems to enterprise systems, the method comprising:
receiving, by a GAI integration platform, a request from an application executed by an enterprise system of an enterprise, the application being executed remotely from the GAI integration platform;
processing, through a control tier of the GAI integration platform, at least a portion of the request through a set of modules to generate a prompt that is responsive to the request, the set of modules comprising one or more of a prompt template module, a prompt quality module, and a personally identifiable information (PII) detection module;
transmitting, by the GAI integration platform, the prompt to a GAI system of a plurality of GAI systems;
receiving, by the GAI integration platform, a response from the GAI system, the response comprising content generated by the GAI system in response to the prompt; and
transmitting, by the GAI integration platform, the response to the application.

2. The method of claim 1, wherein processing, through a control tier of the GAI integration platform, at least a portion of the request through a set of modules to generate a prompt that is responsive to the request comprises populating a prompt template at least partially based on data provided in a payload of the request.

3. The method of either of claims 1 or 2, wherein processing, through a control tier of the GAI integration platform, at least a portion of the request through a set of modules to generate a prompt that is responsive to the request comprises determining context data representative of one or more of the enterprise and an enterprise operation, and providing the prompt as a few-shot prompt that includes at least a portion of the context data.

4. The method of any preceding claim, wherein processing, through a control tier of the GAI integration platform, at least a portion of the request through a set of modules to generate a prompt that is responsive to the request comprises determining context data from at least one external source based on data provided in a payload of the request, and providing the prompt as a few-shot prompt that includes at least a portion of the context data.

5. The method of any preceding claim, wherein one or more of the request and the prompt is processed by the GAI integration platform to mitigate presence of one or more of PII and profanity before transmitting the prompt to the GAI system.

6. The method of any preceding claim, further comprising logging interaction data representative of requests from and responses to the application, and providing one or more dashboards that graphically depict at least a portion of the interaction data.

7. The method of any preceding claim, wherein a GAI model of the GAI system is fine-tuned based on enterprise data provided by the enterprise.

8. A system, comprising:
one or more processors; and
a computer-readable storage device coupled to the one or more processors and having instructions stored thereon which, when executed by the one or more processors, cause the one or more processors to perform operations for remote integration of generative artificial intelligence (GAI) systems to enterprise systems, the operations comprising:
receiving, by a GAI integration platform, a request from an application executed by an enterprise system of an enterprise, the application being executed remotely from the GAI integration platform;
processing, through a control tier of the GAI integration platform, at least a portion of the request through a set of modules to generate a prompt that is responsive to the request, the set of modules comprising one or more of a prompt template module, a prompt quality module, and a personally identifiable information (PII) detection module;
transmitting, by the GAI integration platform, the prompt to a GAI system of a plurality of GAI systems;
receiving, by the GAI integration platform, a response from the GAI system, the response comprising content generated by the GAI system in response to the prompt; and
transmitting, by the GAI integration platform, the response to the application.

9. The system of claim 8, wherein processing, through a control tier of the GAI integration platform, at least a portion of the request through a set of modules to generate a prompt that is responsive to the request comprises populating a prompt template at least partially based on data provided in a payload of the request.

10. The system of either of claims 8 or 9, wherein processing, through a control tier of the GAI integration platform, at least a portion of the request through a set of modules to generate a prompt that is responsive to the request comprises determining context data representative of one or more of the enterprise and an enterprise operation, and providing the prompt as a few-shot prompt that includes at least a portion of the context data.

11. The system of any of claims 8 to 10, wherein processing, through a control tier of the GAI integration platform, at least a portion of the request through a set of modules to generate a prompt that is responsive to the request comprises determining context data from at least one external source based on data provided in a payload of the request, and providing the prompt as a few-shot prompt that includes at least a portion of the context data.

12. The system of any of claims 8 to 11, wherein one or more of the request and the prompt is processed by the GAI integration platform to mitigate presence of one or more of PII and profanity before transmitting the prompt to the GAI system.

13. The system of any of claims 8 to 12, wherein operations further comprise logging interaction data representative of requests from and responses to the application, and providing one or more dashboards that graphically depict at least a portion of the interaction data.

14. The system of any of claims 8 to 13, wherein a GAI model of the GAI system is fine-tuned based on enterprise data provided by the enterprise.

15. A computer-readable storage media coupled to the one or more processors and having instructions stored thereon which, when executed by the one or more processors, cause the one or more processors to perform the steps of any of claims 1-7.
